(19) Europäisches Patentamt
European Patent Office
Office européen des brevets

(11) EP 0 557 107 B1

(12) EUROPEAN PATENT SPECIFICATION

(45) Date of publication and mention of the grant of the patent:
**02.06.1999 Bulletin 1999/22**

(51) Int Cl.$^6$: **C08F 10/00**, C08F 4/649, C08F 210/16

(21) Application number: **93301217.1**

(22) Date of filing: **19.02.1993**

# (54) Polyolefin resin and method for the preparation thereof

Polyolefinharz und Verfahren zu seiner Herstellung

Résine polyoléfinique et procédé pour sa préparation

(84) Designated Contracting States:
**BE DE ES FR GB IT NL SE**

(30) Priority: **21.02.1992 JP 69950/92**
**21.02.1992 JP 70091/92**
**11.08.1992 JP 234077/92**

(43) Date of publication of application:
**25.08.1993 Bulletin 1993/34**

(73) Proprietor: **IDEMITSU PETROCHEMICAL COMPANY LIMITED**
**Tokyo-to (JP)**

(72) Inventors:
- **Nakacho, Kenji, c/o Idemitsu Petrochem. Co. Ltd. Ichihara-shi, Chiba-ken (JP)**
- **Funabashi, Hideo, c/o Idemitsu Petrochem. Co. Ltd. Ichihara-shi, Chiba-ken (JP)**
- **Sugahara, Akinobu, c/o Idemitsu Petrochem. Co. Ltd Ichihara-shi, Chiba-ken (JP)**

(74) Representative:
**Baverstock, Michael George Douglas et al**
**BOULT WADE TENNANT,**
**27 Furnival Street**
**London EC4A 1PQ (GB)**

(56) References cited:

| | |
|---|---|
| EP-A- 0 243 127 | EP-A- 0 520 811 |
| EP-A- 0 520 816 | DE-A- 1 519 367 |
| DE-A- 1 947 588 | FR-A- 2 539 133 |
| US-A- 3 357 961 | US-A- 4 552 859 |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

The present invention relates to a method for the preparation of a polyolefin resin. More particularly, the invention relates to a method for the preparation of an ethylene-based polymeric resin by using a specific catalyst system which is capable of exhibiting high catalytic activity and is inexpensive as compared with conventional catalyst systems for the polymerization of olefins.

In recent years, polyethylene resins having extremely high average molecular weights have been made showing high mechanical strength and rigidity along with the excellent abrasion resistance and impact strength in articles shaped therefrom in such fields as plastic resin pipes, films and fibers. These super-high molecular weight ethylene-based resins, however, are not without problems because the melting points of these polymers are relatively high, which causes difficulty in molding.

It is known in this regard that exceptionally-high molecular weight copolymeric resins of ethylene and another α-olefin have relatively low melting points as compared with homopolymeric polyethylene resins of super-high molecular weight so that it is expected that the usually incompatible requirements for a very high average molecular weight to ensure good mechanical properties of shaped articles and a relatively low melting point of the resin to ensure good workability in molding can be simultaneously satisfied with certain ethylene-based copolymeric resins capable of exhibiting excellent molding workability without affecting the excellent mechanical properties of the shaped articles made therefrom. Such an ethylene-based copolymeric resin is described, for example, in Japanese Patents Kokai No. 62-57406 and No. 62-57407 but the copolymeric resins described therein have melting points which can hardly be substantially lower than 120°C so that their contribution to an advantageous effect in molding workability by a decreased melting point is quite insufficient.

On the other hand, it is reported in Macromolecules, volume 22, page 1273 (1989) that an ethylene-based copolymeric resin prepared by using a vanadium-containing catalyst or a so-called Kaminsky catalyst has a relatively low melting point as compared with copolymeric resins obtained by using a conventional catalyst system comprising titanium, magnesium and a halogen as a consequence of the random distribution of the comonomeric units of the α-olefin comonomers in the molecular structure. These catalyst systems, however, can hardly meet the requirement to obtain a very high average molecular weight of the copolymer so that it is generally understood heretofore that these catalyst systems do not give an ethylene-based copolymeric resin having good molding workability and capable of giving a shaped article having excellent mechanical properties.

Turning to the technology for the preparation of polyolefin resins in general, it has been a trend in recent years that the conventional polymerization catalysts in the form of heterogeneous catalyst systems comprising catalytically active ingredients supported on a solid carrier to be replaced by homogeneous catalyst systems in the form of a uniform solution or dispersion which can be prepared easily without using any special apparatus for the preparation of the catalyst. As a class of such catalyst systems, a homogeneous catalyst system comprising a metallocene compound of a transition metal element and an aluminoxane compound is described in Japanese Patent Kokai No. 58-19309 and elsewhere. Although the catalytic activity of this catalyst system in olefin polymerization is very high, especially, in copolymerization of ethylene and other α-olefin monomers, the catalyst system is disadvantageous because it uses a large amount of an expensive aluminoxane compound and there is a significant decrease in the average molecular weight of the resin product when the polymerization temperature is high.

As a remedy for the above mentioned problems in catalyst systems comprising a metallocene compound and an aluminoxane compound, Japanese Patent Kokai No. 63-3008 describes a method using a homogeneous catalyst system comprising an oxygen-containing titanium compound such as titanium alkoxides and an aluminoxane compound. This method is also not free from problems, due to the expensiveness of the catalyst system for which a large amount of an expensive aluminoxane compound must be used, in addition to the problem that its catalytic activity is significantly decreased when hydrogen gas is introduced into the polymerization system with an object to control the average molecular weight of the resin product.

EP-A-0 520 816 describes the preparation of a polyolefin resin by polymerising an olefin in the presence of tetrabutoxytitanium, methylaluminoxane, triethyl aluminum and toluene. However, the ratios and concentrations differ substantially from those of the present invention and the polymer yield in the present invention is substantially higher.

The present invention provides a method for the preparation of a polyolefin resin or, in particular, an ethylene-based copolymer resin having an extremely high average molecular weight so as to ensure excellent mechanical properties of shaped articles made therefrom, but still having a relatively low melting point so as to ensure good workability in molding, by using a specific homogeneous catalyst system which can be prepared at low cost without using a large amount of an expensive aluminoxane compound and without using any special apparatus for the preparation of the catalyst system.

Thus, the method of the present invention for the preparation of a polyolefin resin comprises polymerizing an olefin monomer or a combination of two or more kinds of olefin monomers, in a polymerization field, with a catalyst system obtained by subjecting, to a contacting reaction, the catalytic ingredients including:

(a) a titanium compound represented by the general formula

$$TiR_mL_k,$$

in which each R is a ligand, independently from the others, selected from σ-bonding ligands and chelate-forming ligands, L is a Lewis base, the subscript m is of 2, 3 or 4 and the subscript k is 0, 1 or 2;
(b) an aluminoxane compound;
(c) optionally an organoaluminum compound represented by the general formula $R^1{}_nAlx_{3-n}$, in which $R^1$ is a monovalent hydrocarbon group selected from the group consisting of alkyl groups having 1 to 20 carbon atoms and aryl groups having 6 to 20 carbon atoms, X is a halogen atom, an alkoxy group having 1 to 20 carbon atoms or an aryloxy group having 6 to 20 carbon atoms and the subscript n is a positive integer not exceeding 3,
the catalytic ingredients also including
(d) an organic compound having a π electron selected from aromatic hydrocarbon compounds, internal olefins, internal dienes, internal dialkynes and alkenyl containing organosilane compounds, the molar proportions of the catalytic ingredients in the field of the contacting reaction being such that the molar ratio of the ingredient (b) to the ingredient (a) is in the range from 1 to 500, the molar ratio of the ingredient (c) if present, to the ingredient (a) is in the range from 1 to 500 and the molar ratio of the ingredient (d) to the ingredient (a) is in the range from 0.1 to 2000 and the concentration of the ingredient (a) in the field of the contacting reaction being in the range from 0.1 mmole/liter to 100 mmoles/liter.

It is optional that the catalytic ingredients (c) and (d) mentioned above are used in combination. Although the above mentioned catalytic ingredients (a),(b),(c) and (d) can be simultaneously brought into contact with the olefin monomer or monomers, it is preferable that these catalytic ingredients are brought into contact with each other prior to their contacting the olefin monomer or monomers to be polymerized, so as to form a pre-formed catalyst mixture which is then brought into contact with the monomer or monomers.
The above described unique method for the preparation of a polyolefin resin gives a copolymeric ethylene-based polyolefin resin having a melting point not exceeding 120°C and having an intrinsic viscosity [η] of at least 5 dl/g as measured at a temperature of 135°C in decahydronaphthalene (Decalin, a trademark) as the solvent when the resin is a copolymer consisting of a first monomeric moiety of ethylene and a second monomeric moiety of a comonomer selected from α-olefins having 3 to 18 carbon atoms per molecule and diolefins having 6 to 20 carbon atoms per molecule in molar fractions of from 85 to 99.5% of the first monomeric moiety and from 15 to 0.5% of the second monomeric moiety, the melting point Tm of the resin in °C being given by the inequalities of:

$$Tm \leq 128 - 4.0\ Pco;$$

and

$$Tm < 122 - 1.0\ Pco,$$

in which Pco is the molar fraction in % of the second monomeric moiety in the resin, when Pco does not exceed 2% by moles and when Pco is larger than 2% by moles, respectively.
As is described above, the method of the invention for the preparation of a polyolefin resin is characterised by the use of a unique catalyst system comprising the catalytic ingredients (a), (b), (c) and (d) each defined above.
The catalytic ingredient (a) in the catalyst system is a compound of titanium. The titanium compound as the catalytic ingredient (a) has an atom of the metal and specified numbers of the ligands R and L bonded to the atom of the metal. The ligands denoted by R are selected, each independently from the others, from two classes including σ-bonding ligands and chelate-forming ligands and and the ligands denoted by L are selected from Lewis bases.
Examples of the σ-bonding ligands include a hydrogen atom, oxygen atom, halogen atoms, alkyl groups having 1 to 20 carbon atoms, alkoxy groups having 1 to 20 carbon atoms, aryl groups having 6 to 20 carbon atoms, alkaryl groups, aralkyl groups, acyloxy groups having 1 to 20 carbon atoms, alkenyl groups, substituted alkenyl groups and substituent groups having a silicon atom such as trihydrocarbylsilyl, trihydrocarbylsiloxy and trihydrocarbyloxysilyl groups.
The chelate-forming ligand is exemplified by unsubstituted or substituted acetylacetonato groups.
Examples of the Lewis base include ethers such as dimethyl ether, diethyl ether and tetrahydrofuran, thioethers such as tetrahydrothiophen, esters such as ethyl benzoate, nitrile compounds such as acetonitrile and benzonitrile, amines such as trimethyl amine, triethyl amine, tributyl amine, N,N-dimethyl aniline, pyridine, 2,2'-bipyridine and phenanthroline, phosphine compounds such as triethyl phosphine and triphenyl phosphine, linear unsaturated hydrocarbon compounds such as ethylene, butadiene, 1-pentene, isoprene, pentadiene and 1-hexene, cyclic unsaturated hydrocarbon compounds such as benzene, toluene, xylene, cycloheptatriene, cyclooctadiene, cyclooctatriene and cyclooctatetraene.

Optionally, two or more of these ligands jointly form a ring structure together with the atom of titanium.

The catalytic ingredient (a) is selected preferably from the following classes of oxygen-containing titanium compounds including:

i) titanium compounds represented by the general formula $M(OR^2)_aZ_{4-a}$, in which M is an atom of titanium, $R^2$ is a monovalent hydrocarbon group selected from alkyl groups having 1 to 20 carbon atoms and aryl groups having 6 to 20 carbon atoms, Z is a halogen atom, alkoxy group, aryloxy group or acyloxy group and the subscript a is a positive integer not exceeding 4;

ii) metaloxane polymers represented by the general formula $R^2O\{M(OR^2)_2\text{-}O\}_pR^2$, in which M and $R^2$ each have the same meaning as defined above and the subscript p is a positive integer not exceeding 20; and

iii) acetylacetonato complexes of the titanium represented by the general formula $M(OR^2)_2(acac)_2$, in which M and $R^2$ each have the same meaning as defined above and acac is an acetylacetonato group.

Examples of the particular compounds suitable as the catalytic ingredient (a) include the following titanium compounds: tetramethyl titanium, tetrabenzyl titanium, tetramethoxy titanium, tetraethoxy titanium, tetra-n-propoxy titanium, tetraisopropoxy titanium, tetra-n-butoxy titanium, tetraisobutoxy titanium, tetra-tert-butoxy titanium, tetra-n-octoxy titanium, tetra(2-ethylhexoxy) titanium, tetraphenoxy titanium, triisopropoxy chlorotitanium, diisopropoxy dichlorotitanium, isopropoxy trichlorotitanium, di-n-butoxy dichlorotitanium, n-butoxy trichlorotitanium, titanium tetrachloride, titanium tetrabromide, bis(2,6-di-tert-butylphenoxy) dimethyl titanium, bis(2,6-di-tert-butyl-phenoxy) dichlorotitanium, bis(acetylacetonato) dichlorotitanium, bis(acetylacetonato) diisopropoxy titanium, bis(acetylacetonato) oxytitanium, 2,2'-thiobis(4-methyl-6-tert-butylphenoxy) dichlorotitanium, 2,2'-thiobis(4-methyl-6-tert-butylphenoxy) diisopropoxy titanium, 2,2'-methylene-bis(4-methyl-6-tert-butylphenoxy) dichlorotitanium, and 2,2'-methylene-bis(4-methyl-6-tert-butylphenoxy) diisopropoxy titanium. These compounds of titanium, can be used either singly or as a combination of two kinds or more according to need.

The catalytic ingredient (b) is an aluminoxane compound which is a known compound consisting of the units represented by the general formula $\{AlR^3\text{-}O\}$, in which $R^3$ is a monovalent hydrocarbon group having 1 to 8 carbon atoms or, preferably, a methyl, ethyl or isobutyl group. The aluminoxane compound is preferably a polyaluminoxane compound having a cyclic or linear molecular structure expressed by the general formulae

$$-(AlR^3\text{-}O)_r- \quad \text{and} \quad R^3-(AlR^3\text{-}O)_s-AlR^3_2,$$

respectively, in which $R^3$ has the same meaning as defined above and the subscripts r and s are each a positive integer of 2 to 100.

The above defined aluminoxane compound can be prepared by known methods including the method in which a trialkylaluminum is reacted directly with water by using a suitable organic solvent such as toluene, benzene or ether, the method in which a trialkylaluminum is reacted with a crystalline salt having water of crystallization such as hydrated copper sulfate or aluminium sulfate, and the method in which a trialkylaluminum is reacted with silica gel after adsorption of water thereon. The aluminoxane compound prepared by the above described method sometimes contains unrequired trialkylaluminum used as the starting material but the reaction product containing a small amount of a trialkylaluminum as an impurity can be used as such without further purification. If so desired, the catalytic ingredient (b) can be a combination of two kinds or more of different aluminoxane compounds.

The catalytic ingredient (c) is an organoaluminum compound preferably represented by the general formula $R^1{}_nAlX_{3-n}$, in which $R^1$ is a monovalent hydrocarbon group selected from alkyl groups having 1 to 20 carbon atoms and aryl groups having 6 to 20 carbon atoms, X is a halogen atom, an alkoxy group having 1 to 20 carbon atoms or an aryloxy group having 6 to 20 carbon atoms and n is a positive number not exceeding 3. Examples of such an organoaluminum compound include trimethylaluminum, triethylaluminum, triisopropylaluminum, tri-n-butylaluminum, triisobutylaluminum, tri-n-hexylaluminum, tri-n-octylaluminum, isoprenylaluminum, diethylaluminum ethoxide, diisobutylaluminum ethoxide, diethylaluminum chloride and ethylaluminum dichloride. In particular, trialkylaluminum compounds are preferred. If so desired, catalytic ingredient (c) can be a combination of two kinds or more of the above named different organoaluminum compounds.

The catalytic ingredient (d), which is used optionally in combination with the above defined catalytic ingredient (c), is an organic compound having a $\pi$-electron including aromatic hydrocarbon compounds and internal olefins, internal dienes, internal dialkynes and alkenyl-containing organosilane compounds.

Examples of the aromatic hydrocarbon compounds include benzene, toluene and alkyl-substituted benzenes, e.g., ethylbenzene, n-propylbenzene, n-octylbenzene, xylene, and 1,3,5- and 1,2,3-trimethylbenzenes, as well as halogen-substituted aromatic compounds such as chlorobenzene and bromobenzene, nitrogen-containing aromatic compounds such as nitrobenzene and aniline, aromatic ether compounds such as benzyl methyl ether, 1,3-dimethoxy benzene, anisole, 2-methoxy toluene and 3-methoxy toluene, aromatic ester compounds such as methyl benzoate, ethyl benzoate and tert-butyl benzoate, polycyclic aromatic compounds such as naphthalene, 1,2,3,4-tetrahydro-naphthalene (Tetralin, a trademark), anthracene and phenanthrene and phenyl groups containing organosilane compounds such as phenyl silane and phenyl trimethyl silane.

Other possible catalytic ingredients (d) are internal olefins such as 2-butene, 2-hexene, 3-hexene, 2-methyl-2-heptene, 2-methyl-3- heptene, 2-octene and 3-octene, internal dienes such as 2,4-hexadiene, 2,6-octadiene and 3,5-octadiene and internal dialkynes such as 2,4-hexadiyne and 2,6- and 3,5-octadiynes as well as alkenyl-containing organosilane compounds such as 2-octenyl trimethyl silane.

If so desired, the catalytic ingredient (d) can be a combination of two kinds or more of the above defined different $\pi$-electron-containing compounds.

As is described above, the catalyst system used in the inventive method is a combination of the above defined catalytic ingredients (a), (b) and (c) and (d). The catalytic activity of the catalyst system can be exhibited when these catalytic ingredients are simultaneously brought into contact with the $\alpha$-olefin monomer or monomers to be polymerized. It is, however, preferable that the catalyst system is a reaction product obtained by contacting the catalytic ingredients each with the others beforehand in the absence of the monomer or monomers to be polymerized with the catalyst system.

When the catalytic ingredients are individually but simultaneously brought into contact with the monomer or monomers, the concentration of ingredient (a) should be in the range from 0.0001 to 5 mmoles/liter or, preferably, from 0.0005 to 1 mmole/liter in the polymerization field while the molar ratio of ingredient (b) calculated as aluminium atoms to ingredient (a) should be in the range from 10 to 100,000 or, preferably, from 20 to 10,000, the molar ratio of ingredient (c) to ingredient (a) should be in the range from 1 to 10,000 or, preferably, from 1 to 1,000 and the molar ratio of ingredient (d) to ingredient (a) should be in the range from 0.1 to 10,000 or, preferably, from 1 to 5,000.

When the catalyst system is a reaction product of the catalytic ingredients contacted beforehand in the absence of the monomer or monomers to be polymerized, the catalytic ingredients are dissolved or dispersed in an inert solvent as a contacting medium to effect contacting of the respective ingredients therein under an atmosphere of an inert gas. Suitable inert solvents include aliphatic and alicyclic hydrocarbon compounds having 5 to 18 carbon atoms per molecule, exemplified by n-pentane, isopentane, hexane, heptane, octane, nonane, decane, tetradecane and cyclohexane or, preferably, hexane, heptane and cyclohexane either singly or as a combination of two or more. The temperature and length of time for the contacting treatment of the catalytic ingredients are not particularly limitative. The order in which the catalytic ingredients (a), (b) and (c) and (d) are brought into contact each with the others is also not particularly limitative.

The concentrations of the ingredients (a), (b), (c) and (d) in the contacting medium should be in the range from 0.01 to 100 mmoles/liter, in the range from 0.1 to 1,000 mmoles/liter calculated as aluminium atoms, in the range from 0.01 to 1,000 mmoles/liter and in the range from 0.01 to 1,000 mmoles/liter, respectively. The following inequalities are held between the concentrations of the respective ingredients in the contacting medium:

$$1 < [b]:[a] < 500;$$

$$1 < [c]:[a] < 500;$$

and

$$0.1 < [d]:[a] < 2000,$$

in which [a], [b], [c] and [d] are each the molar concentration of the catalytic ingredients (a), (b), (c) and (d), respectively, in the contacting medium assuming that [a] is at least 0.1 mmole/liter. When [b]:[a] is 1 or smaller, no improvement can be expected in the activity of the catalyst system by the preliminary contacting treatment of the ingredients while, when [b]:[a] is 500 or larger, the polymeric resin product obtained with the catalyst system may be subject to contamination with an increased amount of an aluminium impurity which affects the properties. When [c]:[a] is 1 or smaller, no improvement can also be expected in the activity of the catalyst system by the preliminary contacting treatment of the

ingredients while, when [c]:[a] is 500 or larger, the polymeric resin product may also be subject to contamination with an increased amount of an aluminium impurity so as to affect the properties. When [d]:[a] is 0.1 or smaller, no improvement can also be expected in the activity of the catalyst system by the preliminary contacting treatment of the ingredients while, when [d]:[a] is 2000 or larger, the activity of the catalyst system sometimes may also be subject to a decrease. When [a] is 1 mmole/liter or smaller, the velocity of the reaction taking place in the contacting treatment of the ingredients is very low so that insufficient improvement can practically be obtained in the activity of the catalyst system.

The polymerization reaction of an α-olefin monomer, e.g., ethylene, or copolymerization of α-olefin monomers according to the invention can be performed by bringing the monomer or monomers into contact with the above described catalyst system. The α-olefin monomers to which the inventive method is applicable include those having 2 to 10 carbon atoms in a molecule either singly or as a combination of two kinds or more. These α-olefin monomers can be copolymerized with a diene monomer such as butadiene, chloroprene or ethylidene norbornene. The method of the present invention is particularly suitable for the preparation of a polyethylene or, more particularly, low density polyethylene having a linear molecular structure.

To describe the α-olefin monomers to be copolymerized with ethylene in more detail, the α-olefin as the comonomer includes monoolefins of a straightly linear or branched molecular structure having 3 to 18 carbon atoms in a molecule and α-olefins having an aromatic substituent group in the molecule. Examples of such an α-olefin monomer include propylene, butene-1, hexene-1, octene-1, nonene-1, decene-1, undecene-1 and dodecene-1 having a straightly linear molecular structure, 3-methylbutene-1, 3-methylpentene-1, 4-methylpentene-1, 2-ethylhexene-1, and 2,2,4-trimethylpentene-1 having a branched molecular structure and styrene having an aromatic substituent group.

The diene monomers which can be copolymerized with the α-olefin monomers or, in particular, ethylene include unconjugated diene compounds of 6 to 20 carbon atoms per molecule having a straightly linear or branched molecular structure. Examples of suitable diene monomers include 1,5-hexadiene, 1,6-heptadiene, 1,7-octadiene, 1,8-nonadiene, 1,9-decadiene, 2,5-dimethyl-1,5-hexadiene and 1,4-dimethyl-4-tert-butyl-2,6-heptadiene, as well as endomethylene-type cyclic diene compounds such as 5-vinyl-2-norbornene. Polyene compounds such as 1,5,9-decatriene can also be used as the comonomer.

The type of polymerization reaction according to the inventive method is not particularly limitative including the method of slurry polymerization, high-temperature solution polymerization, vapor-phase polymerization and bulk polymerization. The solvent used for the polymerization is a known inert organic solvent which is an aliphatic or alicyclic hydrocarbon compound having 5 to 18 carbon atoms in a molecule. Examples of suitable organic solvents include n-pentane, isopentane, hexane, heptane, octane, nonane, decane, tetradecane and cyclohexane. Preferable are hexane, heptane and cyclohexane. These organic solvents can be used either singly or as a mixture of two kinds or more according to need.

The polymerization temperature is not particularly limitative depending on the kind of the monomer to be polymerized and other factors but usually selected in the range from 0 to 350°C or, preferably, from 20 to 250°C. The polymerization pressure is also not particularly limitative but usually selected in the range from 0 to 150 $kg/cm^2G$ (1 $kg/cm^2$ G = 0.981 bar G) or, preferably, from 0 to 100 $kg/cm^2G$.

When it is desired to control or decrease the average molecular weight of the polymeric resin product, the polymerization system is admixed with a known polymerization moderating agent such as hydrogen gas, alkylaluminum compounds or alkylzinc compounds or, preferably, trialkylaluminum compounds or alkylzinc compounds.

The above described inventive method for the preparation of a polyolefin is applicable to any α-olefin monomer to give a polyolefin resin having an outstandingly high average molecular weight to ensure good mechanical properties of shaped articles of the resin but still capable of exhibiting excellent flowability behavior with a relatively low melting point to ensure good workability in molding. In particular, novel and unique polyolefin resins can be obtained according to the inventive method when the resin is a copolymer consisting of from 85 to 99.5% by moles of a first monomeric moiety of ethylene and from 15 to 0.5% by moles of a second moiety of a comonomer selected from α-olefin compounds having 3 to 18 carbon atoms in a molecule and diene compounds having 6 to 20 carbon atoms in a molecule.

Specifically, the copolymeric ethylene-based resin obtained by the inventive method is characterised by an intrinsic viscosity [η] of at least 5 dl/g as measured in decahydronaphthalene (Decalin, a trademark) as the solvent and at a temperature of 135°C and by a melting point Tm in °C expressed by the inequalities:

$$Tm \leqq 128 - 4.0\ Pco;$$

and

$$Tm < 122 - 1.0\ Pco,$$

in which Pco is the molar fraction of the second monomeric moiety in the copolymeric resin in %, assuming that Pco does not exceed 2% and exceeds 2%, respectively.

The above mentioned intrinsic viscosity of the copolymer is measured in an Ubbelohde viscosimeter at 135°C by using solutions of the copolymer in decahydronaphthalene having a viscosity in the range from 0.02 to 0.16 g/dl. The melting point Tm of the copolymer is determined by using a differential scanning calorimeter (DSC). A typical procedure for the determination of Tm by using a DSC is as follows. The temperature of the sample and the reference is increased to 190°C and, after maintaining this temperature for 3 minutes, the temperature is decreased to 0°C at a rate of 10°C/minute. After maintaining the temperature at 0°C for 5 minutes, the temperature is again increased at a constant rate of 10°C/minute to take a melting curve on the DSC, from which the temperature corresponding to the peak of maximum heat absorption is recorded as the Tm. The sample to be subjected to this determination is in the form of a compression-molded piece having a weight of 10 mg.

The above defined copolymeric resin obtained according to the inventive method of polymerization is also characterised by a relatively low degree of crystallinity. Specifically, the crystallinity Q of the copolymer in % is expressed by the inequalities:

$$Q \leqq 55 - 5.0\ Pco;$$

and

$$Q < 50 - 2.5\ Pco,$$

in which Pco is the molar fraction of the second monomeric moiety in the copolymeric resin in %, assuming that Pco does not exceed 2% and exceeds 2%, respectively. Determination of the crystallinity can be performed according to the procedure described in Journal of Polymer Science, Polymer Physics Edition, volume 29, page 1179 (1991) by applying the equation $Q = \Delta H/\Delta H^*$, in which $\Delta H$ is the enthalpy of fusion of the copolymer and $\Delta H^*$ is the enthalpy of fusion of a perfectly crystalline polyethylene homopolymer which is assumed to be 289 J/g. The value of the enthalpy of fusion of the copolymer can be obtained from the area surrounded by the melting curve recorded on the DSC diagram between two points corresponding to 10°C and 130°C and a base line connecting these two points.

In the following, the inventive method for the preparation of a polyolefin resin and the unique copolymeric ethylene-based resin are illustrated in more detail by way of examples. In the following description, various compounds relevant to the examples are referred to for convenience by the abbreviations listed below:

| | |
|---|---|
| TET : | tetraethoxy titanium |
| TPT : | tetra(isopropoxy) titanium |
| TBT : | tetra(n-butoxy) titanium |
| TBA : | tri(isobutyl) aluminium |
| TEA : | triethyl aluminium |
| TOA : | tri(n-octyl) aluminium |
| TMA : | trimethyl aluminium |
| MAO : | methyl aluminoxane |

The amount of the MAO given below always refers to the amount of the aluminium atoms contained therein.

Preparation 1. Preparation of MAO-1.

A commercial product of MAO in the form of a toluene solution (produced by Schering Corp.) was subjected to thickening by evaporating the solvent at room temperature under reduced pressure into a heavy syrup which was further dried at 100°C for 1 hour under reduced pressure to give MAO solid. The solid MAO was dispersed in dry hexane at a concentration of 3.0 moles/liter calculated as aluminium atoms. The thus obtained dispersion of MAO in hexane is referred to as MAO-1 hereinbelow.

Preparation 2. Preparation of MAO-2.

Solid MAO obtained in the same manner as described above was again dissolved in dry toluene at a concentration of 3.0 moles/liter calculated as aluminium atoms. The thus obtained solution of MAO in toluene is referred to as MAO-2 hereinbelow.

Example 1 (outside the scope of the claims).

Into an autoclave of 1 liter capacity equipped with a stirrer after flushing with dry nitrogen gas were introduced 340 ml of dry n-hexane and 60 ml of 1-octene to form a mixture which was heated to and maintained at 60°C. Thereafter, 3.0 mmoles of TBA, 7.0 mmoles of MAO-1 and 0.01 mmole of TBT were introduced into the autoclave immediately followed by a temperature elevation to 80°C. Ethylene gas was introduced into the autoclave maintained at 80°C under pressure so as to maintain a total pressure of 8 kg/cm$^2$G at 80°C for 30 minutes to effect the copolymerization reaction of ethylene and 1-octene.

After the end of the above mentioned polymerization time, the autoclave was released to atmospheric pressure and methyl alcohol was introduced into it to terminate the polymerization reaction. The polymerization mixture in the autoclave was put into a large volume of a mixture of ethyl alcohol and hydrochloric acid to effect deashing and the polymeric product was recovered by filtration followed by drying at 80°C for 4 hours under reduced pressure to give 23.1 g of a resin powder which was a copolymer of ethylene and 1-octene having an intrinsic viscosity of 2.4 dl/g. The activity of the catalyst system corresponds to 96 kg of the polymer per hour per g of titanium atoms in the catalyst system.

Example 2.

Into an autoclave of 1 liter capacity equipped with a stirrer after flushing with dry nitrogen gas were introduced 340 ml of dry n-hexane, 60 ml of 1-octene and 0.1 mmole of toluene to form a mixture which was heated to and maintained at 60°C. Thereafter, 10.0 mmoles of MAO-1 and 0.01 mmole of TBT were introduced into the autoclave immediately followed by temperature elevation to 80°C. Ethylene gas was introduced into the autoclave maintained at 80°C under pressure so as to maintain a total pressure of 8 kg/cm$^2$G for 60 minutes at 80°C to effect the polymerization reaction.

The procedure thereafter was the same as in Example 1 so as to give a resin powder which was a copolymer of ethylene and 1-octene having an intrinsic viscosity of 7.6 dl/g. The activity of the catalyst system corresponds to 58 kg of the polymer per hour per g of titanium atoms in the catalyst system.

Example 3.

The experimental procedure was the same as in Example 1 except that 0.1 mmole of toluene was additionally introduced into the autoclave together with n-hexane and 1-octene. The copolymer of ethylene and 1-octene obtained in this manner had an intrinsic viscosity of 3.3 dl/g. The activity of the catalyst system corresponds to 112 kg of the polymer per hour per g of titanium atoms in the catalyst system.

Comparative Example 1.

The experimental procedure was the same as in Example 2 except for omission of 0.1 mmole of toluene. The copolymer of ethylene and 1-octene obtained in this manner had an intrinsic viscosity of 7.4 dl/g. The activity of the catalyst system corresponds to 48 kg of the polymer per hour per g of titanium atoms in the catalyst system.

Example 4.

The experimental procedure was approximately the same as in Example 1 except that the amount of TBA was decreased to 0.1 mmole, 7.0 mmoles of MAO-1 were replaced by 9.0 mmoles of MAO-2 with 24 mmoles of toluene and TBT was replaced by the same molar amount of TET. The molar proportion of the MAO to titanium, i.e. [b]:[a], was 900. The polymerization time was 60 minutes instead of 30 minutes so as to give 12.8 g of a polymeric resin product which was a copolymer of ethylene and 1-octene having an intrinsic viscosity of 3.5 dl/g. The activity of the catalyst system corresponds to 26.7 kg of the polymer per hour per g of titanium atoms in the catalyst system.

Example 5.

The experimental procedure was the same as in Example 4 except that the amount of TBA was doubled to 2.0 mmoles and the amount of MAO-2 was decreased to 8.0 mmoles with 22 mmoles of toluene. The value of [b]:[a] (see Example 4) was 800. The polymeric resin product thus obtained was a copolymer of ethylene and 1-octene having an intrinsic viscosity of 2.8 dl/g. The activity of the catalyst system corresponds to 23.0 kg of the polymer per hour per g of titanium atoms in the catalyst system.

Example 6.

The experimental procedure was the same as in Example 4 except that the amount of TBA was increased to 3.0 mmoles and the amount of MAO-2 was decreased to 7.0 mmoles with 20 mmoles of toluene. The value of [b]:[a] (see Example 4) was 700. The polymeric resin product thus obtained was a copolymer of ethylene and 1-octene having an intrinsic viscosity of 2.2 dl/g. The activity of the catalyst system corresponds to 23.0 kg of the polymer per hour per g of titanium atoms in the catalyst system.

Comparative Example 2.

The experimental procedure was the same as in Example 4 except for omission of TBA and an increase of the amount of MAO-2 to 10.0 mmoles with 27 mmoles of toluene. The value of [b]:[a] (see Example 4) was 1000. The polymeric resin product thus obtained was a copolymer of ethylene and 1-octene having an intrinsic viscosity of 9.8 dl/g. The activity of the catalyst system corresponds to 16.2 kg of the polymer per hour per g of titanium atoms in the catalyst system.

Example 7.

The experimental procedure was the same as in Example 4 except for replacement of TBA by the same molar amount of TEA. The polymeric resin product thus obtained was a copolymer of ethylene and 1-octene having an intrinsic viscosity of 3.5 dl/g. The activity of the catalyst system corresponds to 22.3 kg of the polymer per hour per g of titanium atoms in the catalyst system.

Example 8.

The experimental procedure was the same as in Example 5 except for replacement of TBA with the same molar amount of TEA. The polymeric resin product thus obtained was a copolymer of ethylene and 1-octene having an intrinsic viscosity of 2.2 dl/g. The activity of the catalyst system corresponds to 20.5 kg of the polymer per hour per g of titanium atoms in the catalyst system.

Example 9.

A catalyst mixture, referred to as Catalyst-A hereinbelow, was prepared by agitating a mixture of 112 ml of n-hexane, 15.0 mmoles of MAO-2 and 3.0 ml of a n-hexane solution of TET at a concentration of 0.1 mole/liter for 30 minutes at room temperature. The value of [b]:[a] (see Example 4) was 50.

Into an autoclave of 1 liter capacity equipped with a stirrer after flushing with dry argon gas were introduced 340 ml of dry n-hexane and 60 ml of 1-octene to form a mixture which was heated to and maintained at 60°C. Thereafter, 1.0 mmole of TBA and 4.0 ml of Catalyst-A corresponding to 0.5 mmole of MAO and 0.01 mmole of TET and containing 1.4 mmoles of toluene were introduced into the autoclave immediately followed by temperature elevation to 80°C.

The procedure thereafter was the same as in Example 4 so as to give a resin powder which was a copolymer of ethylene and 1-octene having an intrinsic viscosity of 7.4 dl/g. The activity of the catalyst system corresponds to 8.0 kg of the polymer per hour per g of titanium atoms in the catalyst system.

Comparative Example 3.

The experimental procedure was the same as in Example 9 except for omission of TBA. The polymeric resin product thus obtained was a copolymer of ethylene and 1-octene having an intrinsic viscosity of 19.8 dl/g. The activity of the catalyst system corresponds to 6.8 kg of the polymer per hour per g of titanium atoms in the catalyst system.

Example 10.

A catalyst mixture, referred to as Catalyst-B hereinbelow, was prepared by mixing 1.0 mmole of TBA, 9.0 mmoles of MAO-2 containing 24 mmoles of toluene and 0.01 mmole of TET. The value of [b]:[a] (see Example 4) was 900.

An autoclave of 1 liter capacity equipped with a stirrer after flushing with dry argon gas was charged with 380 ml of dry n-hexane and 120 ml of 1-octene to form a mixture which was heated to and maintained at 150°C. Thereafter, 1.0 mmole of TBA and the whole amount of the above prepared Catalyst-B were introduced into the autoclave concurrently with pressurized introduction of ethylene gas to maintain a total pressure of 40 $kg/cm^2G$ so as to effect the

polymerisation reaction at 150°C for 5 minutes. The procedure thereafter was substantially the same as in Example 4 so as to give a polymeric resin product which was a copolymer of ethylene and 1-octene having an intrinsic viscosity of 1.9 dl/g. The activity of the catalyst system corresponds to 120.0 kg of the polymer per hour per g of titanium atoms in the catalyst system.

Comparative Example 4.

The experimental procedure was the same as in Example 10 except for omission of TBA. The value of [b]:[a] (see Example 4) was 1000. The polymeric resin product thus obtained was a copolymer of ethylene and 1-octene having an intrinsic viscosity of 4.1 dl/g. The activity of the catalyst system corresponds to 109.2 kg of the polymer per hour per g of titanium atoms in the catalyst system.

Example 11.

The experimental procedure was the same as in Example 6 except for replacement of TET by the same molar amount of TPT. The value of [b]:[a] (see Example 4) was 700. The polymeric resin product thus obtained was a copolymer of ethylene and 1-octene having an intrinsic viscosity of 2.6 dl/g. The activity of the catalyst system corresponds to 33.0 kg of the polymer per hour per g of titanium atoms in the catalyst system.

Comparative Example 5.

The experimental procedure was just the same as in Example 11 except for omission of TBA and an increase of the amount of MAO-2 to 10.0 mmoles with 27 mmoles of toluene. The polymeric resin product thus obtained was a copolymer of ethylene and 1-octene having an intrinsic viscosity of 11.3 dl/g. The activity of the catalyst system corresponds to 25.4 kg of the polymer per hour per g of titanium atoms in the catalyst system.

Example 12.

The experimental procedure was the same as in Example 6 except for replacement of TET by the same molar amount of TBT. The polymeric resin product thus obtained was a copolymer of ethylene and 1-octene having an intrinsic viscosity of 3.0 dl/g. The activity of the catalyst system corresponds to 37.7 kg of the polymer per hour per g of titanium atoms in the catalyst system.

Comparative Example 6.

The experimental procedure was the same as in Example 12 except for omission of TBA and increase of the amount of MAO-2 to 10.0 mmoles with 27 mmoles of toluene. The polymeric resin product thus obtained was a copolymer of ethylene and 1-octene having an intrinsic viscosity of 9.7 dl/g. The activity of the catalyst system corresponds to 23.4 kg of the polymer per hour per g of titanium atoms in the catalyst system.

Example 13.

A catalyst mixture containing a fine dispersion of MAO, referred to as Catalyst-C hereinbelow, was prepared in the following manner. A Schlenk bottle of 200 ml capacity was charged with 109 ml of dry n-hexane and 3.0 ml of a hexane solution of TBA at a concentration of 1.0 mole/liter and, whilst agitating the mixture, 3.0 ml of a n-hexane solution of TET at a concentration of 0.1 mole/liter were added followed by further continued agitation for 10 minutes. Thereafter, 5.0 ml of the MAO-2 were added to the mixture which was agitated for an additional 30 minutes to complete the contacting treatment of the catalytic ingredients. The molar concentration of TET, ra], in the mixture of this contacting treatment was 2.5 mmoles/liter and the molar ratios of MAO to TET, [b]:[a], TBA to TET, [c]:[a], and toluene to TET, [d]:[a], were 50, 10 and 139, respectively.

An autoclave of 1 liter capacity equipped with a stirrer after flushing with dry nitrogen gas was charged with 340 ml of dry n-hexane and 60 ml of 1-octene to form a reaction medium which was heated to and maintained at 60°C. Thereafter, 4.0 ml of Catalyst-C prepared above corresponding to 0.010 mmole of titanium atoms were introduced into the autoclave immediately followed by temperature elevation to 80°C. Ethylene gas was introduced under pressurization to effect the polymerization reaction for lO minutes while maintaining the total pressure at 8 $kg/cm^2G$ at 80°C. The procedure thereafter was substantially the same as in Example 1 so as to give 23.1 g of a polymeric resin product which was a copolymer of ethylene and 1-octene having an intrinsic viscosity of 19.2 dl/g. The activity of the catalyst system corresponds to 289 kg of the polymer per hour per g of titanium atoms in the catalyst system.

Example 14.

The experimental procedure was the same as in Example 13 except that the catalyst mixture, referred to as Catalyst-C' hereinbelow, was prepared by first mixing TET and MAO-2 in hexane for 10 minutes followed by the addition of TBA to the mixture with further continued agitation for 30 minutes. The polymeric resin product thus obtained was a copolymer of ethylene and 1-octene having an intrinsic viscosity of 21.2 dl/g. The activity of the catalyst system corresponds to 188 kg of the polymer per hour per g of titanium atoms in the catalyst system.

Example 15.

The experimental procedure was the same as in Example 13 except that the catalyst solution, referred to as Catalyst-C" hereinbelow, was prepared by first mixing TBA and MAO-2 in hexane for 10 minutes followed by the addition of TET to the mixture with further continued agitation for 30 minutes. The polymeric resin product thus obtained was a copolymer of ethylene and 1-octene having an intrinsic viscosity of 26.9 dl/g. The activity of the catalyst system corresponds to 290 kg of the polymer per hour per g of titanium atoms in the catalyst system.

Comparative Example 7.

The experimental procedure was the same as in Example 13 except for omission of TBA. The polymeric resin product thus obtained was a copolymer of ethylene and 1-octene having an intrinsic viscosity of 19.8 dl/g. The activity of the catalyst system corresponds to only 7 kg of the polymer per hour per g of titanium atoms in the catalyst system.

Comparative Example 8.

The experimental procedure was the same as in Example 13 except for omission of MAO-2. The result of the polymerization reaction was that only a trace amount of a copolymeric resin was obtained.

Example 16.

A catalyst mixture containing a fine dispersion of MAO, referred to as Catalyst-D hereinbelow, was prepared in the following manner. A Schlenk bottle of 200 ml capacity was charged with 185 ml of dry n-hexane and 4.0 ml of a hexane solution of TBA at a concentration of 1.0 mole/liter and, while mixture was agitated, 4.0 ml of a n-hexane solution of TBT at a concentration of 0.1 mole/liter was added followed by further continued agitation for 10 minutes. Thereafter, 6.7 ml of the MAO-2 were added to the mixture which was agitated for an additional 60 minutes to complete the contacting treatment of the catalytic ingredients. The concentration of titanium in the solution was 0.0020 mmole/liter. The molar ratios of MAO to TBT, [b]:[a], TBA to TBT, [c]:[a], and toluene to TBT, [d]:[a], in the contacting treatment mixture were 50, 10 and 139, respectively.

An autoclave of 1 liter capacity equipped with a stirrer after flushing with dry nitrogen gas was charged with 340 ml of dry n-hexane, 60 ml of 1-octene and 1.0 ml of a hexane solution of TBA at a concentration of 1.0 mole/liter to form a reaction medium which was heated to and maintained at 60°C. Thereafter, the Catalyst-D prepared above in a volume corresponding to 0.0010 mmole of titanium atoms was introduced into the autoclave immediately followed by temperature elevation to 80°C. Ethylene gas was introduced under pressure to effect the polymerization reaction for 60 minutes while maintaining the total pressure at 8 kg/cm$^2$G at 80°C. The procedure thereafter was substantially the same as in Example 1 so as to give a polymeric resin product which was a copolymer of ethylene and 1-octene having an intrinsic viscosity of 9.2 dl/g. The activity of the catalyst system corresponds to 226 kg of the polymer per hour per g of titanium atoms in the catalyst system.

Examples 17 and 18.

The experimental procedure in each of these examples was substantially the same as in Example 16 except that the catalyst mixtures, referred to as Catalysts-D' and -D", respectively, hereinbelow, were prepared by decreasing and increasing the volume of n-hexane used in the contacting treatment of the catalytic ingredients in such a way that the molar concentrations of titanium in the treatment solutions were 0.0010 and 0.0040 mmole/liter, respectively.

A polymeric resin product was obtained in each of Examples 17 and 18, which was a copolymer of ethylene and 1-octene having an intrinsic viscosity of 9.2 and 8.7 dl/g, respectively. The activity of the catalyst system corresponds to 116 kg and 140 kg, respectively, of the polymer per hour per g of titanium atoms in the catalyst system.

Examples 19 to 22.

The experimental procedure in each of these examples was substantially the same as in Example 16 except that the molar ratios of MAO to TBT, [b]:[a], TBA to TBT, [c]:[a], and toluene to TBT, [d]:[a], in the contacting treatment mixture were 20, 10 and 55, respectively, in Example 19, 50, 5 and 139, respectively, in Example 20, 100, 10 and 278, respectively, in Example 21, and 50, 25 and 139, respectively, in Example 22.
A polymeric resin product was obtained in each of Examples 19, 20, 21 and 22, which was a copolymer of ethylene and 1-octene having an intrinsic viscosity of 9.1, 7.6, 9.7 and 10.2 dl/g, respectively. The activity of the catalyst system corresponds to 88 kg, 68 kg, 178 kg and 155 kg, respectively, of the polymer per hour per g of titanium atoms in the catalyst system.

Example 23.

The experimental procedure was the same as in Example 16 except for replacement of TBA by the same molar amount of TEA.
A polymeric resin product was obtained, which was a copolymer of ethylene and 1-octene having an intrinsic viscosity of 6.8 dl/g. The activity of the catalyst system corresponds to 35 kg of the polymer per hour per g of titanium atoms in the catalyst system.

Example 24.

An autoclave of 1 liter capacity equipped with a stirrer after flushing with dry argon gas was charged with 440 ml of dry n-hexane and 60 ml of 1-octene to form a mixture which was heated to and maintained at 185°C. Thereafter, 10 ml of the same catalyst mixture as prepared and used in Example 21 but stored for 13 days at room temperature in a hermetically sealed container corresponding to 0.020 mmole of titanium atoms were introduced into the autoclave concurrently with introduction of ethylene gas under pressure to effect the polymerization reaction for 5 minutes while maintaining the total pressure at 40 $kg/cm^2G$ at 185°C. The procedure thereafter was substantially the same as in Example 1 so as to give a polymeric resin product which was a copolymer of ethylene and 1-octene having an intrinsic viscosity of 9.1 dl/g. The activity of the catalyst system corresponds to 276 kg of the polymer per hour per g of titanium atoms in the catalyst system.

Example 25.

A catalyst mixture, referred to as Catalyst-E hereinbelow, was prepared in the following manner involving the so-called "preliminary polymerization" treatment. A Schlenk bottle of 200 ml capacity was charged with 185 ml of dry n-hexane and 4.0 ml of a n-hexane solution of TBA at a concentration of 1.0 mole/liter to form a mixture and the mixture under agitation was further admixed with 4.0 ml of a n-hexane solution of TBT at a concentration of 0.1 mole/liter followed by further continued agitation for 10 minutes. Thereafter, the mixture was further admixed with 6.7 ml of MAO-2 and 0.63 ml of 1-octene followed by further continued agitation for 60 minutes to effect the contacting treatment of the catalytic ingredients.
The procedure for the copolymerization of ethylene and 1-octene was substantially the same as in Example 16 except for the use of the above prepared Catalyst-E in place of Catalyst-D so as to give a polymeric resin product which was a copolymer of ethylene and 1-octene having an intrinsic viscosity of 8.7 dl/g. The activity of the catalyst system corresponds to 163 kg of the polymer per hour per g of titanium atoms in the catalyst system.

Example 26.

The experimental procedure was substantially the same as in Example 16 except that Catalyst-D was used after storage for 8 days at room temperature in a hermetically sealed container. The copolymeric resin product thus obtained with an activity of the catalyst of 187 kg of the polymer per hour per g of titanium atoms had an intrinsic viscosity of 11.1 dl/g indicating good storability of the catalyst mixture.

Example 27.

A catalyst mixture, referred to as Catalyst-F hereinbelow, was prepared in the same manner as in the preparation of Catalyst-D in Example 16 except for replacement of 4.0 ml of the n-hexane solution of TBA with 0.8 ml of a n-hexane solution of TOA in a concentration of 1.0 mole/liter. The molar ratio of TOA to TBT, [c]:[a], was 2.
An autoclave of 1 liter capacity equipped with a stirrer after flushing with dry nitrogen gas was charged with

360 ml of dry n-hexane, 40 ml of 1-octene and 0.2 ml of a n-hexane solution of TOA at a concentration of 1.0 mole/liter to form a medium which was heated to and maintained at 60°C. Thereafter, Catalyst-F prepared above in a volume corresponding to 0.0010 mmole of titanium atoms was introduced into the autoclave immediately followed by temperature elevation to 80°C and introduction of ethylene gas under pressure so as to effect the polymerization reaction for 60 minutes while maintaining the total pressure at 8 kg/cm$^2$G at 80°C. The procedure thereafter was substantially the same as in Example 1 so as to give a polymeric resin product which was a copolymer of ethylene and 1-octene having an intrinsic viscosity of 9.2 dl/g. The activity of the catalyst system corresponds to 77 kg of the polymer per hour per g of titanium atoms in the catalyst system.

Example 28 (outside the scope of the invention).

A catalyst mixture containing fine dispersion of MAO, referred to as Catalyst-H hereinbelow, was prepared in the following manner. A Schlenk bottle of 200 ml capacity was charged with 139 ml of dry n-hexane and 3.0 ml of a hexane solution of TBA at a concentration of 1.0 mole/liter and, while under the mixture was agitated, 3.0 ml of a n-hexane solution of TBT at a concentration of 0.1 mole/liter were added followed by further continued agitation for 10 minutes. Thereafter, 5.0 ml of the MAO-1 were added to the mixture which was agitated for an additional 60 minutes to complete the contacting treatment of the catalytic ingredients. The concentration of titanium in the mixture for the contacting treatment was 0.0020 mmole/liter. The molar ratios of MAO to TBT, [b]:[a], and TBA to TBT, [c]:[a], in the contacting treatment mixture were 50 and 10, respectively.

An autoclave of 1 liter capacity equipped with a stirrer after flushing with dry nitrogen gas was charged with 360 ml of dry n-hexane, 40 ml of 1-octene and 1.0 mmole of TBA to form a polymerization medium which was heated to and maintained at 60°C. Thereafter, 0.5 ml of Catalyst-H prepared above and stored for 24 hours at room temperature in a hermetically sealed container kept in a dark place to effect aging corresponding to 0.001 mmole of titanium atoms was introduced into the autoclave immediately followed by temperature elevation to 80°C and introduction of ethylene gas under pressure so as to effect the polymerization reaction for 60 minutes while maintaining the total pressure at 8 kg/cm$^2$G at 80°C. The procedure thereafter was substantially the same as in Example 1 so as to give a polymeric resin product which was a copolymer of ethylene and 1-octene having an intrinsic viscosity of 9.3 dl/g. The activity of the catalyst system corresponds to 80 kg of the polymer per hour per g of titanium atoms in the catalyst system.

Example 29.

A catalyst mixture containing a fine dispersion of MAO, referred to as Catalyst-I hereinbelow, was prepared in the following manner. A Schlenk bottle of 200 ml capacity was charged with 142 ml of dry n-hexane and 0.32 ml (0.3 mmole) of toluene and, while the mixture was agitated, 3.0 ml of a n-hexane solution of TBT in a concentration of 0.1 mole/liter were added. Thereafter, 5.0 ml of the MAO-1 were added to the mixture which was agitated for an additional 60 minutes to complete the contacting treatment of the catalytic ingredients. The concentration of titanium in the mixture for the contacting treatment was 0.0020 mmole/liter.

The copolymerization reaction of ethylene and 1-octene was carried out in the same manner as in Example 28 except for replacement of Catalyst-H with the same volume of Catalyst-I to give a polymeric resin product having an intrinsic viscosity of 8.8 dl/g. The activity of the catalyst system corresponds to 12 kg of the polymer per hour per g of the titanium atoms in the catalyst system.

Example 30.

A catalyst mixture containing a fine dispersion of MAO, referred to as Catalyst-J hereinbelow, was prepared in the following manner. A Schlenk bottle of 200 ml capacity was charged with 139 ml of dry n-hexane and 0.32 ml (0.3 mmole) of toluene and 3.0 ml of a n-hexane solution of TBA at a concentration of 1.0 mole/liter followed by addition of 3.0 ml of a n-hexane solution of TBT at a concentration of 0.1 mole/liter. After agitation of the mixture for 10 minutes, 5.0 ml of the MAO-1 were added to the mixture which was agitated for an additional 60 minutes to complete the contacting treatment of the catalytic ingredients. The concentration of titanium in the mixture for the contacting treatment was 0.0020 mmole/liter. The molar ratios of MAO to TBT, [b]:[a], TBA to TBT, [c]:[a], and toluene to TBT, [d]:[a], were 50, 10 and 10, respectively.

The copolymerization reaction of ethylene and 1-octene was carried out in the same manner as in Example 28 except for replacement of Catalyst-H with the same volume of Catalyst-J after storage for 24 hours at room temperature to give a polymeric resin product having an intrinsic viscosity of 11.4 dl/g. The activity of the catalyst system corresponds to 468 kg of the polymer per hour per g of titanium atoms in the catalyst system.

Comparative Example 9.

The experimental procedure was the same as in Example 29 except for omission of toluene in the preparation of the catalyst mixture. The copolymeric resin product had an intrinsic viscosity of 9.2 dl/g. The activity of the catalyst system corresponds to 10 kg of the polymer per hour per g of titanium atoms in the catalyst system.

Examples 31 and 32.

The experimental procedure in each of these examples was substantially the same as in Example 30 except that the amount of toluene used in the preparation of the catalyst mixture was changed to 0.03 mmole and 14.2 mmoles, respectively, from 0.3 mmole corresponding to molar ratios of toluene to TBT of 1 and 473, respectively, to give copolymeric resin products having intrinsic viscosities of 11.8 and 8.5 dl/g, respectively. The activity of the catalyst system corresponds to 340 and 240 kg, respectively, of the polymer per hour per g of titanium atoms in the catalyst system.

Examples 33 to 44 and Comparative Example 10.

The experimental procedure in each of these examples was the same as in Example 30 except for replacement of toluene by the same molar amount of one of the $\pi$ electron containing compounds (Examples 33 to 44) or cyclohexane (Comparative Example 10) as indicated in Table 1 below which also shows the intrinsic viscosity of the respective copolymeric resin products obtained and the catalytic activity of the catalyst systems in kg of polymer per hour per g of titanium atoms for a polymerization time of 30 to 60 minutes as shown in the table.

TABLE 1

| | | Ingredient (d) | Polymerization time, minutes | Catalytic activity, kg/g-Ti/hr | Intrinsic ViScosity, dl/g |
|---|---|---|---|---|---|
| Example | 33 | 2-Octene | 60 | 216 | 9.2 |
| | 34 | p-Xylene | 40 | 718 | 9.2 |
| | 35 | Benzene | 60 | 352 | 7.8 |
| | 36 | m-Xylene | 60 | 168 | 7.8 |
| | 37 | n-Propylbenzene | 30 | 1081 | 8.5 |
| | 38 | Isopropylbenzene | 30 | 812 | 10.5 |
| | 39 | tert-Butylbenzene | 60 | 546 | 9.3 |
| | 40 | Napthalene | 60 | 120 | 8.4 |
| | 41 | o-Xylene | 60 | 239 | 7.9 |
| | 42 | Tetralin | 60 | 105 | 6.8 |
| | 43 | Phenylsilane | 60 | 102 | 10.1 |
| | 44 | Phenyltrimethylsilane | 30 | 738 | 6.8 |
| Comparative Example | 10 | Cyclohexane | 60 | 82 | 6.2 |

Examples 45 to 47 and Comparative Example 11.

These examples and comparative example were performed for the homopolymerization of propylene using the same catalyst mixtures as prepared in Examples 28, 31 and 30 and Comparative Example 9, respectively. An autoclave of 1 liter capacity equipped with a stirrer after flushing with dry nitrogen gas was charged with 400 ml of dry n-hexane and 1.0 mmole of TBA to form a mixture which was heated to and maintained at 60°C. Then, 1.0 ml of the respective catalyst mixture corresponding to 0.002 mmole of titanium atoms was introduced into the autoclave immediately followed by temperature elevation to 70°C and introduction of propylene gas under pressure to give a total pressure of 8 $kg/cm^2G$, which pressure was maintained for 30 minutes at 70°C to effect polymerization of the propylene. After the end of this polymerization time, methyl alcohol was introduced into the autoclave released to atmospheric pressure to terminate the polymerization reaction. The polypropylene product thus obtained was deashed by washing with a large volume of a mixture of methyl alcohol and hydrochloric acid followed by filtration and drying at 80°C for 4

hours under reduced pressure. Table 2 below shows the intrinsic viscosity of the respective polymers and the activity of the respective catalyst mixtures in kg of the polymer per hour per g of titanium atoms.

TABLE 2

| | | Catalytic activity kg/g-Ti/hr | Intrinsic viscosity, dl/g |
|---|---|---|---|
| Example | 45 | 4.4 | 2.1 |
| | 46 | 21.6 | 1.8 |
| | 47 | 21.0 | 1.8 |
| Comparative Example 11 | | 0.7 | 2.2 |

Preparation 3. Preparation of MAO-3.

A commercial product of MAO in the form of a toluene solution (produced by Toso-AKZO Co.) was subjected to thickening by evaporation of the solvent at room temperature under reduced pressure to a heavy syrup which was further dried at 90°C for 1 hour under reduced pressure to give solid MAO. The solid MAO was dispersed in dry hexane at a concentration of 2.0 moles/liter calculated as aluminium atoms. The thus obtained dispersion of MAO in hexane is referred to as MAO-3 hereinbelow.

Example 48.

A catalyst mixture containing a fine dispersion of MAO, referred to as Catalyst-K hereinbelow, was prepared in the following manner. A Schlenk bottle of 200 ml capacity was charged with 129 ml of dry n-hexane, 3.0 mmoles of anisole and 3.0 ml of a hexane solution of TBA at a concentration of 1.0 mole/liter to form a mixture into which 3.0 ml of a hexane solution of TBT at a concentration of 0.1 mole/liter were added under agitation followed by further continued agitation for 10 minutes. Thereafter, 15.0 ml of MAO-3 were added to the mixture followed by further continued agitation for 60 minutes to effect the contacting treatment of the respective ingredients.

Into an autoclave of 1 liter capacity equipped with a stirrer after flushing with dry nitrogen gas were introduced 360 ml of dry n-hexane, 40 ml of 1-octene and 6.0 mmoles of TBA to form a mixture which was heated to and maintained at 60°C. Thereafter, 0.5 ml of Catalyst-K after aging for 24 hours at room temperature in a dark place, corresponding to 0.001 mmole of titanium atoms was added to the mixture immediately followed by temperature elevation to 80°C and then introduction of ethylene gas under pressure to give a total pressure of 8 $kg/cm^2G$, which pressure was maintained for 60 minutes at 80°C to effect copolymerization of the ethylene and 1-octene. The subsequent procedure was substantially the same as in Example 1 so as to give 5.1 g of a resin product which was a copolymer of ethylene and 1-octene having an intrinsic viscosity of 12.0 dl/g. The activity of the catalyst system corresponds to 106 kg of the polymer per hour per g of titanium atoms in the catalyst system.

Examples 49 to 55 and Comparative Example 12.

The experimental procedure in each of these examples was substantially the same as in Example 48 except for replacement of anisole by the compound listed in Table 3 below as component (d). The volume of MAO-3 in Examples 55 to 58 was decreased to 7.5 ml in the preparation of the respective catalyst mixtures. The polymerization time in Example 51 was 30 minutes instead of 60 minutes in the other examples. The experimental procedure in Comparative Example 12 was also substantially the same as in Example 48 except for omission of anisole and a decrease in the volume of MAO-3 to 7.5 ml in the preparation of the catalyst mixture.

Table 3 also shows the intrinsic viscosity of the respective copolymeric resin products in dl/g and the activity of the respective catalyst systems in g of the polymer per hour per g of titanium atoms in the respective catalyst systems.

TABLE 3

| | | Ingredient (d) | Polymer acetylene time, minutes | Catalytic activity kg/g-Ti/hr | IntrinSic VIScosity dl/g |
|---|---|---|---|---|---|
| Example | 48 | Anisole | 60 | 106 | 12.0 |
| | 49 | Furan | 60 | 37 | 3.2 |
| | 50 | Mesitylene | 60 | 76 | 6.1 |
| | 51 | n-Octylbenzene | 30 | 536 | 3.9 |
| | 52 | Fluorobenzene | 60 | 76 | 4.8 |
| | 53 | Tetraflurobenzene | 60 | 57 | 3.5 |
| | 54 | Benzyltrimethylsilane | 60 | 41 | 4.3 |
| | 55 | Dimethylvinylphenylsilane | 60 | 30 | 5.4 |
| Comparative Example | 12 | None | 60 | 21 | 3.8 |

Example 56.

A catalyst mixture containing a fine dispersion of MAO, referred to as Catalyst-L hereinbelow, was prepared in the following manner. A Schlenk bottle of 200 ml capacity was charged with 136 ml of dry n-hexane, 3.0 mmoles of toluene and 3.0 ml of a hexane solution of TBA at a concentration of 1.0 mole/liter to form a mixture into which 3.0 ml of a hexane solution of bis(acetylacetonato) diisopropoxy titanium at a concentration of 0.1 mole/liter were added under agitation followed by further continued agitation for 10 minutes. Thereafter, 7.5 ml of MAO-3 were added to the mixture followed by further continued agitation for 60 minutes to effect the contacting treatment of the respective ingredients.

Copolymerization of ethylene and 1-octene was performed in the same manner as in Example 48 except for the use of Catalyst-L after aging for 7 days at room temperature in a dark place in place of Catalyst-K to give a copolymeric resin product having an intrinsic viscosity of 7.2 dl/g. The activity of the catalyst system corresponds to 85 kg of the polymer per hour per g of titanium atoms in the catalyst system.

Example 57.

The experimental procedure was the same as in Example 56 except for replacement of bis(acetyl-acetonato) diisopropoxy titanium by the same molar amount of bis(acetylacetonato) dichloro titanium. The copolymeric resin product thus obtained had an intrinsic viscosity of 5.5 dl/g. The activity of the catalyst system corresponds to 64 kg of the polymer per hour per g of titanium atoms in the catalyst system.

Example 58.

The experimental procedure was substantially the same as in Example 13 except that the volume of Catalyst-C was 1.0 ml corresponding to 0.0025 mmole of titanium atoms instead of 4.0 ml to give 7.8 g of a polymeric product. The copolymeric resin product thus obtained was examined for the molar fraction of the 1-octene moiety in %, melting point Tm in °C by differential scanning calorimetry, degree of crystallinity Q in % and intrinsic viscosity in dl/g to give the results shown in Table 4 below which also shows the corresponding data for the copolymer obtained in Example 13.

Example 59.

The experimental procedure was substantially the same as in Example 16 except that the volume of the hexane solution of TBA used in the preparation of the catalyst mixture was increased to 10.0 ml to give 7.4 g of a polymeric product. The copolymeric resin product thus obtained was examined for the same items as for the copolymeric resin obtained in Example 58 to give the results shown in Table 4 below.

Example 60.

The experimental procedure was substantially the same as in Example 59 except that the catalyst mixture was used after aging for 8 days at room temperature in a dark place and the volumes of n-hexane and 1-octene introduced into the autoclave were 370 ml and 30 ml, respectively, so as to give 15.4 g of a polymeric product. The copolymeric resin product thus obtained was examined for the same items as for the copolymeric resin obtained in Example 58 to give the results shown in Table 4 below.

Example 61.

The experimental procedure was substantially the same as in Example 59 except that the catalyst mixture was used after aging for 8 days at room temperature in a dark place and the volumes of n-hexane and 1-octene introduced into the autoclave were 385 ml and 15 ml, respectively, so as to give 13.7 g of a polymeric product. The copolymeric resin product thus obtained was examined for the same items as for the copolymeric resin obtained in Example 58 to give the results shown in Table 4 below.

Example 62.

The experimental procedure was substantially the same as in Example 59 except that the catalyst mixture was used after aging for 8 days at room temperature in a dark place and the volumes of n-hexane, 1-octene and the hexane solution of TBA introduced into the autoclave were 370 ml, 30 ml and 5.0 ml, respectively, to give 10.3 g of a polymeric product. The copolymeric resin product thus obtained was examined for the same items as for the copolymeric resin obtained in Example 58 to give the results shown in Table 4 below.

Example 63.

A catalyst mixture containing a fine dispersion of MAO, referred to as Catalyst-M hereinbelow, was prepared in the following manner. A Schlenk bottle of 200 ml capacity was charged with 179 ml of dry n-hexane and 4.0 ml of a hexane solution of TBA at a concentration of 1.0 mole/liter to form a mixture into which 4.0 ml of a hexane solution of TBT at a concentration of 0.1 mole/liter were added under agitation followed by further continued agitation for 10 minutes. Thereafter, 13.3 ml of MAO-2 were added to the mixture followed by further continued agitation for 60 minutes to effect the contacting treatment of the respective ingredients.

An autoclave of 1 liter capacity equipped with a stirrer after flushing with dry argon gas was charged with 440 ml of dry n-hexane and 60 ml of 1-octene to form a mixture which was heated to and maintained at 185°C. Thereafter, 10 ml of Catalyst-M prepared above after aging for 13 days at room temperature in a dark place corresponding to 0.020 mmole of titanium atoms were introduced into the autoclave under pressure together with introduction of ethylene gas to give a total pressure of 40 $kg/cm^2G$, which pressure was maintained for 5 minutes at 185°C to effect copolymerization of the ethylene and octane. The polymerization mixture after completion of the reaction was processed in substantially the same manner as in Example 1 to give 22.0 g of a polymeric product. The copolymeric resin product thus obtained was examined for the same items as for the copolymeric resin obtained in Example 58 to give the results shown in Table 4 below.

TABLE 4

| | | Molar fraction of 1-octene moiety, % | Melting point Tm, °C | Degree of crystallinity Q, % | Intrinsic viscosity, dl/g |
|---|---|---|---|---|---|
| Example | 13 | 9.1 | 61.8 | 10.1 | 19.2 |
| | 58 | 8.5 | 78.4 | 14.8 | 34.5 |
| | 59 | 6.9 | 80.7 | 18.9 | 10.2 |
| | 60 | 3.6 | 98.3 | 30.6 | 9.9 |
| | 61 | 1.9 | 110.7 | 36.6 | 9.5 |
| | 62 | 2.8 | 104.7 | 33.0 | 5.3 |
| | 63 | 2.3 | 115.9 | 34.1 | 9.1 |

## Claims

1. A method for the preparation of a polyolefin resin which comprises polymerizing an olefin monomer or a combination of two or more kinds of olefin monomers, in a polymerization field, with a catalyst system obtained by subjecting, to a contacting reaction, the catalytic ingredients including:

   (a) a titanium compound represented by the general formula

   $$TiR_mL_k,$$

   in which each R is a ligand, independently from the others, selected from σ-bonding ligands and chelate-forming ligands, L is a Lewis base, the subscript m is of 2, 3 or 4 and the subscript k is 0, 1 or 2;
   (b) an aluminoxane compound;
   (c) optionally an organoaluminum compound represented by the general formula $R^1{}_nAlX_{3-n}$, in which $R^1$ is a monovalent hydrocarbon group selected from the group consisting of alkyl groups having 1 to 20 carbon atoms and aryl groups having 6 to 20 carbon atoms, X is a halogen atom, an alkoxy group having 1 to 20 carbon atoms or an aryloxy group having 6 to 20 carbon atoms and the subscript n is a positive integer not exceeding 3, the catalytic ingredients also including
   (d) an organic compound having a π electron selected from aromatic hydrocarbon compounds, internal olefins, internal dienes, internal dialkynes and alkenyl-containing organosilane compounds, the molar proportions of the catalytic ingredients in the field of the contacting reaction being such that the molar ratio of the ingredient (b) to the ingredient (a) is in the range from 1 to 500, the molar ratio of the ingredient (c) if present to the ingredient (a) is in the range from 1 to 500 and the molar ratio of the ingredient (d) to the ingredient (a) is in the range from 0.1 to 2000 and the concentration of the ingredient (a) in the field of the contacting reaction being in the range from 0.1 mmole/liter to 100 mmoles/liter.

2. The method for the preparation of a polyolefin resin as claimed in claim 1 in which the polymerization of the olefin monomer or monomers is performed in the presence of an organic solvent which is an aliphatic or alicyclic hydrocarbon compound having 5 to 18 carbon atoms per molecule.

3. The method for the preparation of a polyolefin resin as claimed in claim 1 in which the catalytic ingredient (a), is a titanium compound represented by the general formula $Ti(OR^2)_aZ_{4-a}$, in which $R^2$ is a monovalent hydrocarbon group selected from alkyl groups having 1 to 20 carbon atoms and aryl groups having 6 to 20 carbon atoms, Z is a halogen atom, alkoxy group, aryloxy group or acyloxy group and the subscript a is a positive integer not exceeding 4.

4. The method for the preparation of a polyolefin resin as claimed in claim 1 in which the catalytic ingredient (b) is an aluminoxane compound consisting of the units represented by the general formula $\{AlR^3\text{-}O\}$ and having a cyclic or linear molecular structure represented by the general formula

   $$-\!\!\left(-AlR^3-O-\right)_r\!\!- \quad \text{and} \quad R^3 -\!\!\left(-AlR^3-O-\right)_s\!\!-AlR^3{}_2,$$

   in which $R^3$ is a monovalent hydrocarbon group having 1 to 8 carbon atoms and the subscript r and s are each a positive integer of 2 to 100.

5. The method for the preparation of a polyolefin resin as claimed in claim 1 in which the catalytic ingredient (c) is a trialkylaluminum compound.

6. The method for the preparation of a polyolefin resin as claimed in claim 1 in which the catalytic ingredient (d) is selected from benzene and alkyl-substituted benzenes.

7. The method for the preparation of a polyolefin resin as claimed in claim 6 in which the alkyl-substituted benzene is selected from toluene, ethylbenzene, n-propylbenzene, n-octylbenzene, xylene, 1,3,5-trimethylbenzene and 1,2,3-trimethylbenzene.

8. The method for the preparation of a polyolefin resin as claimed in claim 1 in which the organic compound having

a $\pi$ electron is phenyl silane or phenyl trimethyl silane.

## Patentansprüche

1. Verfahren zur Herstellung eines Polyolefinharzes, das umfaßt: Polymerisieren eines Olefinmonomers oder einer Kombination von zwei oder mehr Arten von Olefinmonomeren in einer Polymerisationszone mit einem Katalysatorsystem, das erhalten wird durch Unterwerfen der Kontaktreaktion der Katalysatorbestandteile, die einschließen:

   (a) eine Titanverbindung, die durch die allgemeine Formel

   $$TiR_mL_k,$$

   dargestellt wird, worin R jeweils ein Ligand ist, der unabhängig von den anderen ausgewählt wird aus $\sigma$-Bindungs-Liganden und Chelat-bildenden Liganden, L eine Lewis-Base ist, m 2, 3 oder 4 ist und k 0, 1 oder 2 ist;
   (b) eine Aluminoxanverbindung;
   (c) wahlweise eine Organoaluminiumverbindung, dargestellt durch die allgemeine Formel $R^1{}_nAlX_{3-n}$, worin $R^1$ eine monovalente Kohlenwasserstoffgruppe ist, die aus der Gruppe ausgewählt wird, die besteht aus Alkylgruppen mit 1 bis 20 Kohlenstoffatomen und Arylgruppen mit 6 bis 20 Kohlenstoffatomen, X ein Halogenatom, eine Alkoxygruppe mit 1 bis 20 Kohlenstoffatomen oder eine Aryloxygruppe mit 6 bis 20 Kohlenstoffatomen ist, und n eine positive ganze Zahl ist, die 3 nicht übersteigt,
   die Katalysatorbestandteile schließen weiterhin ein:
   (d) eine organische Verbindung, die $\pi$-Elektronen aufweist, ausgewählt aus aromatischen Kohlenwasserstoffverbindungen, internen Olefinen, internen Dienen, internen Dialkinen und Alkenyl-enthaltenden Organosilanverbindungen, wobei die molaren Anteile der katalytischen Bestandteile in der Kontaktreaktionszone derart sind, daß das molare Verhältnis des Bestandteils (b) zum Bestandteil (a) im Bereich von 1 bis 500 liegt, das molare Verhältnis des gegebenenfalls vorhandenen Bestandteils (c) zum Bestandteil (a) im Bereich von 1 bis 500 liegt, und das molare Verhältnis des Bestandteils (d) zum Bestandteil (a) im Bereich von 0,1 bis 2000 liegt und die Konzentration des Bestandteils (a) in der Kontaktreaktionszone im Bereich von 0,1 mmol/Liter bis 100 mmol/Liter beträgt.

2. Verfahren zur Herstellung eines Polyolefinharzes nach Anspruch 1, worin die Polymerisation des Olefinmonomers oder der Olefinmonomere in Gegenwart eines organischen Lösungsmittels durchgeführt wird, bei dem es sich um eine aliphatische oder alicyclische Kohlenwasserstoffverbindung mit 5 bis 18 Kohlenstoffatomen pro Molekül handelt.

3. Verfahren zur Herstellung eines Polyolefinharzes nach Anspruch 1, worin der katalytische Bestandteil (a) eine Titanverbindung ist, die durch die allgemeine Formel $Ti(OR^2)_aZ_{4-a}$ dargestellt wird, worin $R^2$ eine monovalente Kohlenwasserstoffgruppe ist, die aus Alkylgruppen mit 1 bis 20 Kohlenstoffatomen und Arylgruppen mit 6 bis 20 Kohlenstoffatomen ausgewählt ist, Z ein Halogenatom, eine Alkoxygruppe, eine Aryloxygruppe oder eine Acyloxygruppe ist, und a eine positive ganze Zahl ist, die 4 nicht übersteigt.

4. Verfahren zur Herstellung eines Polyolefinharzes nach Anspruch 1, worin der katalytische Bestandteil (b) eine Aluminoxanverbindung ist, die aus Einheiten besteht, die dargestellt werden durch die allgemeine Formel $\{AlR^3-O\}$ und eine cyclische oder lineare molekulare Struktur, dargestellt durch die allgemeine Formeln

   $$-\!\!\left(-AlR^3-O-\right)_r\!\!- \quad \text{und} \quad R^3-\left(-AlR^3-O-\right)_s-AlR^3{}_2$$

   aufweisen, worin $R^3$ eine monovalente Kohlenwasserstoffgruppe mit 1 bis 8 Kohlenstoffatomen ist und r und s jeweils positive ganze Zahlen von 2 bis 100 sind.

5. Verfahren zur Herstellung eines Polyolefinharzes nach Anspruch 1, worin der katalytische Bestandteil (c) eine Trialkylaluminiumverbindung ist.

**6.** Verfahren zur Herstellung eines Polyolefinharzes nach Anspruch 1, worin der katalytische Bestandteil (d) aus Benzol und Alkyl-substituierten Benzolen ausgewählt ist.

**7.** Verfahren zur Herstellung eines Polyolefinharzes nach Anspruch 6, worin das Alkyl-substituierte Benzol ausgewählt wird aus Toluol, Ethylbenzol, n-Propylbenzol, n-Octylbenzol, Xylol, 1,3,5-Trimethylbenzol und 1,2,3-Trimethylbenzol.

**8.** Verfahren zur Herstellung eines Polyolefinharzes nach Anspruch 1, worin die organische Verbindung mit den $\pi$-Elektronen ein Phenylsilan oder ein Phenyltrimethylsilan ist.

**Revendications**

**1.** Méthode pour la préparation d'une résine de polyoléfine qui comprend la polymérisation d'un monomère d'oléfine ou d'une combinaison de deux types ou plus de monomères d'oléfine, dans un champ de polymérisation, avec un système d'un catalyseur obtenu en soumettant à une réaction de contact, les ingrédients catalytiques comprenant :

(a) un composé de titane représenté par la formule générale

$$TiR_mL_k,$$

dans laquelle chaque R est un ligand, indépendamment des autres, sélectionné parmi des ligants $\delta$ -liants et des ligands formant des chelates, L est une base de Lewis, l'indice m est 2, 3 ou 4 et l'indice k est 0, 1 ou 2 ;
(b) un composé d'aluminoxane ;
(c) facultativement, un composé d'organaluminium représenté par la formule générale $R^1{}_nAlX_{3-n}$, où $R^1$ est un groupe hydrocarbure monovalent sélectionné dans le groupe consistant en groupes alkyles ayant 1 à 20 atomes de carbone et groupes aryles ayant 6 à 20 atomes de carbone, x est un atome d'halogène, un groupe alcoxy ayant 1 à 20 atomes de carbone ou un groupe aryloxy ayant 6 à 20 atomes de carbone et l'indice n est un entier positif ne dépassant pas 3,
les ingrédients catalytiques comprenant également
(d) un composé organique ayant un électron $\pi$ sélectionné parmi des composés d'hydrocarbures aromatiques, des oléfines internes, des diènes internes, des dialcynes internes et des composés d'organosilane contenant un alcényle, les proportions molaires des ingrédients catalytiques dans le champ de la réaction de contact étant telles que le rapport molaire de l'ingrédient (b) à l'ingrédient (a) soit de l'ordre de 1 à 500, le rapport molaire de l'ingrédient (c), s'il est présent, à l'ingrédient (a) soit de l'ordre de 1 à 500 et que le rapport molaire de l'ingrédient (d) a l'ingrédient (a) soit de l'ordre de 0,1 à 2000 et que la concentration de l'ingrédient (a) dans le champ de la réaction de contact soit de l'ordre de 0,1 mmole/litre à 100 mmoles/litre.

**2.** Méthode pour la préparation d'une résine de polyoléfine selon la revendication 1, dans laquelle la polymérisation du monomère ou des monomères d'oléfine est accomplie en présence d'un solvant organique qui est un composé d'hydrocarbure aliphatique ou alicyclique ayant 5 à 18 atomes de carbone par molécule.

**3.** Méthode pour la préparation d'une résine de polyoléfine selon la revendication 1, dans laquelle l'ingrédient catalytique (a) est un composé de titane représenté par la formule générale $Ti(OR^2)_aZ_{4-a}$, dans laquelle $R^2$ est un groupe hydrocarbure monovalent sélectionné parmi des groupes alkyles ayant 1 à 20 atomes de carbone et des groupes aryles ayant 6 à 20 atomes de carbone, Z est un atome d'halogène, un groupe alcoxy, un groupe aryloxy ou un groupe acyloxy et l'indice a est un entier positif ne dépassant pas 4.

**4.** Méthode pour la préparation d'une résine de polyoléfine selon la revendication 1, dans laquelle l'ingrédient catalytique (b) est un composé d'aluminoxane consistant en unités représentées par la formule générale

$$-(AlR^3-O)_r-$$

et ayant une structure moléculaire cyclique ou linéaire représentée par la formule générale

$$-\!\!\left(-AlR^3-O-\right)_r- \quad \text{et} \quad R^3-\!\!\left(-AlR^3-O-\right)_s-AlR^3{}_2 \,,$$

où $R^3$ est un groupe hydrocarbure monovalent ayant 1 à 8 atomes de carbone et l'indice r et s sont chacun un entier positive de 2 à 100.

**5.** Méthode pour la préparation d'une résine de polyoléfine selon la revendication 1, dans laquelle l'ingrédient catalytique (c) est un composé de trialkylaluminium.

**6.** Méthode pour la préparation d'une résine de polyoléfine selon la revendication 1 dans laquelle l'ingrédient catalytique (d) est sélectionné parmi le benzène et des benzènes alkyle substitués.

**7.** Méthode pour la préparation d'une résine de polyoléfine selon la revendication 6 dans laquelle le benzène alkyle substitué est sélectionné parmi le toluène, l'éthylbenzène, le n-propylbenzène, le n-octylbenzène, le xylène, le 1,3,5-triméthylbenzène et le 1,2,3-triméthylbenzène.

**8.** Méthode pour la préparation d'une résine de polyoléfine selon la revendication 1, dans laquelle le composé organique ayant un électron $\pi$ est le phényl silane ou le phényl triméthyl silane.